# EUROPEAN PATENT APPLICATION

(11) **EP 4 206 049 A1**
(43) Date of publication of application: **05.07.2023**
(21) Application number: 22215765.3
(22) Date of filing: 22.12.2022
(51) Int. Cl.: B60W 10/04, B60W 10/18, B60W 30/14

(54) **VEHICLE CONTROL METHOD AND DEVICE**

(30) Priority: 30.12.2021 CN 202111642203
(71) Applicant: Nio Technology (Anhui) Co., Ltd, Hefei City, Anhui 230601 (CN)
(72) Inventor: WANG, Mingyuan, Hefei City, Anhui, 230601 (CN); ZHANG, Xianhui, Hefei City, Anhui, 230601 (CN); WU, Liren, Hefei City, Anhui, 230601 (CN); YUAN, Da, Hefei City, Anhui, 230601 (CN); XIAO, Bohong, Hefei City, Anhui, 230601 (CN)
(74) Representative: Vossius & Partner Patentanwälte Rechtsanwälte mbB

(57) **Abstract**

The invention relates to a vehicle control method. The vehicle control method includes: receiving a motion parameter of a vehicle; detecting, based on the motion parameter, whether there is a longitudinal obstacle in front of the vehicle; and when it is detected that there is a longitudinal obstacle in front of the vehicle, generating compensation torque based on the detected longitudinal obstacle, to perform compensation for a control torque of the vehicle to generate required torque of the vehicle. The invention further relates to a vehicle control device, a computer-readable storage medium, and a vehicle.

## Description

### Technical Field

The invention relates to the field of vehicle control, and in particular, to a vehicle control method and device, a computer-readable storage medium, and a vehicle.

### Background Art

Currently, vehicle speed control (especially vehicle speed control at a low speed) includes an open-loop control solution. To be specific, required torque (also called request torque) can be obtained based on a target vehicle speed and a current vehicle speed by using a comprehensive look-up table and the like. Such a control solution is simple and easy to implement, but the open-loop control precision is often low. When a longitudinal obstacle appears in front of a vehicle, using such an open-loop control solution cannot feed back an impact of the obstacle on a vehicle speed for the speed control.

There is also a closed-loop control solution for vehicle speed control. In such a control solution, a difference between the current vehicle speed and the target vehicle speed is used to control the required torque in real time by using a PID closed-loop control algorithm. Compared with the open-loop control solution, the closed-loop control solution can achieve higher control precision. However, the PID control algorithm often has a great time lag in feedback on the longitudinal obstacle in front of the vehicle. This greatly reduces the control precision, thereby affecting driving experience.

The information disclosed above in the background art of the invention is merely intended to facilitate understanding of the general background of the invention and should not be taken as an acknowledgement or any form of suggestion that the information constitutes the prior art already known to those of ordinary skill in the art.

### Summary of the Invention

According to an aspect of the invention, a vehicle control method is provided. The vehicle control method includes: receiving a motion parameter of a vehicle; detecting, based on the motion parameter, whether there is a longitudinal obstacle in front of the vehicle; and when it is detected that there is a longitudinal obstacle in front of the vehicle, generating compensation torque based on the detected longitudinal obstacle, to perform compensation for a control torque of the vehicle to generate required torque of the vehicle.

As an alternative or addition to the foregoing solution, in the vehicle control method according to an embodiment of the invention, the motion parameter of the vehicle includes at least one of the following parameters: a speed, an acceleration, an acceleration change rate, and the required torque of the vehicle.

As an alternative or addition to the foregoing solution, in the vehicle control method according to an embodiment of the invention, wherein the longitudinal obstacle includes a deceleration obstacle and an acceleration obstacle, the deceleration obstacle includes at least a speed bump and an uphill slope, and the acceleration obstacle includes at least a downhill slope.

As an alternative or addition to the foregoing solution, in the vehicle control method according to an embodiment of the invention, if the required torque does not decrease, while the speed decreases for a first time threshold and/or the acceleration decreases for a second time threshold, it is determined that there is the detected deceleration longitudinal obstacle in front of the vehicle. In addition, the compensation torque is generated based on the detected deceleration longitudinal obstacle, so that the required torque is greater than the control torque.

As an alternative or addition to the foregoing solution, in the vehicle control method according to an embodiment of the invention, if the required torque does not increase, while the speed increases for a third time threshold and/or the acceleration increases for a fourth time threshold, it is determined that there is the detected acceleration longitudinal obstacle in front of the vehicle. In addition, the compensation torque is generated based on the detected acceleration longitudinal obstacle, so that the required torque is less than the control torque.

According to another aspect of the invention, a vehicle control device is provided. The vehicle control device includes: a receiving apparatus configured to receive a motion parameter of a vehicle; a detection apparatus configured to detect, based on the motion parameter, whether there is a longitudinal obstacle in front of the vehicle; and a generation apparatus configured to: generate compensation torque based on the detected longitudinal obstacle when it is detected that there is the longitudinal obstacle in front of the vehicle, to perform compensation for a control torque of the vehicle to generate required torque of the vehicle.

As an alternative or addition to the foregoing solution, in the vehicle control device according to an embodiment of the invention, the motion parameter of the vehicle includes at least one of the following parameters: a speed, an acceleration, an acceleration change rate, and the required torque of the vehicle.

As an alternative or addition to the foregoing solution, in the vehicle control device according to an embodiment of the invention, the longitudinal obstacle includes a deceleration obstacle and an acceleration obstacle, wherein the deceleration obstacle includes at least a speed bump and an uphill slope, and the acceleration obstacle includes at least a downhill slope.

As an alternative or addition to the foregoing solution, in the vehicle control device according to an embodiment of the invention, the detection apparatus is further configured to: if the required torque does not decrease, while the speed decreases for a first time threshold and/or the acceleration decreases for a second time threshold, determine that there is the detected deceleration longitudinal obstacle in front of the vehicle. The generation apparatus is further configured to generate the compensation torque based on the detected deceleration longitudinal obstacle, so that the required torque is greater than the control torque.

As an alternative or addition to the foregoing solution, in the vehicle control device according to an embodiment of the invention, the detection apparatus is further configured to: if the required torque does not increase, while the speed increases for a third time threshold and/or the acceleration increases for a fourth time threshold, determine that there is the detected acceleration longitudinal obstacle in front of the vehicle. The generation apparatus is further configured to generate the compensation torque based on the detected acceleration longitudinal obstacle, so that the required torque is less than the control torque.

According to still another aspect of the invention, a vehicle control device is provided, including a memory, a processor, and a computer program stored on the memory and executable on the processor. The processor, when executing the computer program, implements the vehicle control method according to the invention.

According to still yet another aspect of the invention, a computer-readable storage medium having a computer program stored thereon is provided. When the computer program is executed by a processor, the vehicle control method according to the invention is implemented.

According to a further aspect of the invention, a vehicle is provided, having the vehicle control device according to the invention.

According to the vehicle control solution provided in the invention, a longitudinal obstacle ahead can be detected in a timely manner, and an impact of the obstacle on a vehicle motion can be fed back in required torque in real time, thereby improving both control precision and driving experience of the vehicle.

### Brief Description of the Drawings

The above and other objectives and advantages of the invention will be clearer and more thorough from the following detailed description in conjunction with the drawings.
FIG. 1 is a flowchart of a vehicle control method 1000 according to an embodiment of the invention;
FIG. 2 is a block diagram of a vehicle control device 2000 according to an embodiment of the invention; and
FIG. 3 is a block diagram of a vehicle control device 3000 according to an embodiment of the invention.

### Detailed Description of Embodiments

It should be noted that, unless otherwise specified, the terms "including/comprising", "having", and similar expressions in the specification are intended to indicate a non-exclusive inclusion. In addition, the term "vehicle" or other similar terms herein includes common motor vehicles, such as passenger vehicles (including sport utility vehicles, buses, trucks, etc.), various types of commercial vehicles, and also includes hybrid vehicles, electric vehicles, plug-in hybrid electric vehicles, etc. A hybrid vehicle is a vehicle with two or more power sources, such as a vehicle powered by a gasoline engine and an electric motor.

Various exemplary embodiments according to the invention will be described below in detail with reference to the accompanying drawings.

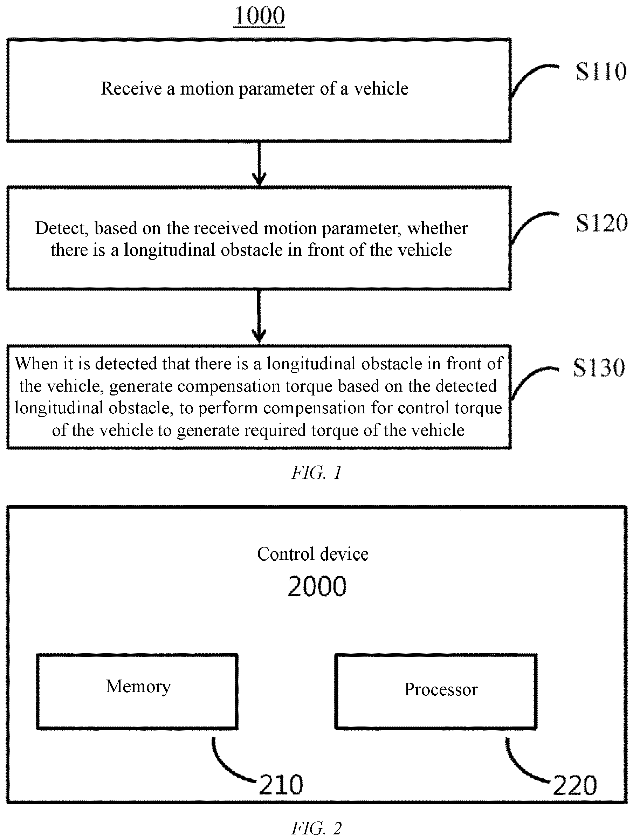

FIG. 1 is a schematic flowchart of a vehicle control method 1000 according to an embodiment of the invention. As shown in FIG. 1, the vehicle control method 1000 includes the following steps.

In step S 110, a motion parameter of a vehicle is received.

In context of the invention, the "motion parameter of a vehicle" is intended to represent a parameter indicating a vehicle motion, such as a speed, an acceleration, an acceleration change rate, required torque of the vehicle.

In step S 120, whether there is a longitudinal obstacle in front of the vehicle is detected based on the motion parameter received in step S 110.

In the context of the invention, the "longitudinal obstacle" includes a deceleration obstacle and an acceleration obstacle.

Specifically, the "deceleration obstacle" is intended to represent an obstacle, such as a speed bump and an uphill slope, that has a negative effect on forward traveling of the vehicle and makes the vehicle decelerate. The "acceleration obstacle" is intended to represent an obstacle, such as a downhill slope, that has a positive effect on forward traveling of the vehicle and makes the vehicle accelerate. In addition, it should be noted that some obstacles may include both a deceleration obstacle and an acceleration obstacle. For example, for a low-lying area of a road, a downhill part in the first half of the area may be an acceleration obstacle for the vehicle, and an uphill part in the second half of the area may be a deceleration obstacle for the vehicle. Therefore, a torque compensation operation described in detail below needs to be performed for the first half and second half of the low-lying area, respectively.

In step S 130, when it is detected that there is a longitudinal obstacle in front of the vehicle in step S 120, compensation torque is generated based on the detected longitudinal obstacle, to perform compensation for control torque of the vehicle to generate required torque of the vehicle.

In the context of the invention, the "control torque" is intended to represent a torque value generated by a vehicle controller for controlling a vehicle torque output without considering the longitudinal obstacle.

The control torque can be determined by using an open-loop method. To be specific, the control torque can be determined based on a target vehicle speed and a current vehicle speed by using a comprehensive look-up table. Using such a control method cannot feed back an impact of the longitudinal obstacle in front of the vehicle on the speed in a timely manner, and further, cannot adjust control over the vehicle in real time based on the impact, which results in low control precision and unsatisfactory passenger experience. The control torque can also be determined by using a closed-loop method. To be specific, the control torque is determined in real time based on a difference between the current vehicle speed and the target vehicle speed by using a PID control algorithm. Using a PID closed-loop control method may achieve high control precision. However, the PID control method has a certain time lag. When the vehicle encounters a passable obstacle (such as a longitudinal obstacle), using the PID control method may be unable to respond to a sudden change of road condition in a timely manner. This greatly reduces control precision of the vehicle, thereby affecting driving comfortableness.

According to the vehicle control method in the embodiment of the invention, when it is detected that there is a longitudinal obstacle in front of the vehicle, corresponding compensation torque can be generated based on the detected obstacle. The compensation torque can be used together with the control torque from the vehicle controller (such as a PID controller) to generate the required torque. This enables an impact of the longitudinal obstacle in front of the vehicle on the vehicle motion to be fed back for the vehicle control in real time, thereby avoiding or at least mitigating the impact of the obstacle on the vehicle control, and improving the vehicle control precision and vehicle driving experience.

Detection and compensation operations performed when there is a deceleration longitudinal obstacle in front of the vehicle is described below by way of examples.

In an embodiment, if the required torque received in step S 110 does not decrease, while the speed of the vehicle received in the step decreases for a first time threshold t₁, it is determined in step S 120 that there is the detected deceleration longitudinal obstacle such as a speed bump or an uphill slope in front of the vehicle. Correspondingly, in step S130, the compensation torque of a positive value is generated based on the detected deceleration longitudinal obstacle, such that the required torque generated after the compensation is greater than the control torque before the compensation, thereby helping the vehicle maintain a stable speed and providing better driving experience for passengers in the vehicle.

In another embodiment, if the required torque received in step S 110 does not decrease, while the acceleration of the vehicle received in the step decreases for a second time threshold t₂, it is determined in step S 120 that there is the detected deceleration longitudinal obstacle such as a speed bump or an uphill slope in front of the vehicle. In this case, correspondingly, in step S130, the compensation torque of a positive value is generated based on the detected deceleration longitudinal obstacle, such that the required torque generated after the compensation is greater than the control torque before the compensation, thereby helping the vehicle maintain a stable speed and providing better driving experience for passengers in the vehicle.

In still another embodiment, if the required torque received in step S 110 does not decrease, while the speed of the vehicle received in the step decreases for the first time threshold t₁ and the acceleration of the vehicle received in the step decreases for the second time threshold t₂, it is determined in step S 120 that there is the detected deceleration longitudinal obstacle such as a speed bump or an uphill slope in front of the vehicle. Correspondingly, in step S130, the compensation torque of a positive value is generated based on the detected deceleration longitudinal obstacle, such that the required torque generated after the compensation is greater than the control torque before the compensation, thereby helping the vehicle maintain a stable speed and providing better driving experience for passengers in the vehicle. Using both the first time threshold t₁ and the second time threshold t₂ to detect the deceleration longitudinal obstacle can further improve robustness of the detection.

In the context of the invention, the first time threshold t₁ is a predetermined threshold used to detect a longitudinal obstacle for a vehicle, and may be any appropriate time threshold, such as 0 ms, 2 ms, or 4 ms, that can be used to detect a deceleration longitudinal obstacle in front of the vehicle based on a vehicle speed. The second time threshold t₂ is a predetermined threshold used to detect a longitudinal obstacle for a vehicle, and may be any appropriate time threshold, such as 0 ms, 2 ms, or 4 ms, that can be used to detect a deceleration longitudinal obstacle in front of the vehicle based on an acceleration.

It should be understood that the detection of the deceleration longitudinal obstacle in the control method 1000 is performed based on, but not limited to, the vehicle speed, the acceleration, or a combination of the vehicle speed and the acceleration, and may also be performed based on any appropriate vehicle motion parameter such as the acceleration change rate or any combination of any of the parameters. The invention is not limited thereto.

Detection and compensation operations performed when there is an acceleration longitudinal obstacle in front of the vehicle is described below by way of examples.

In an embodiment, if the required torque received in step S 110 does not increase, while the speed of the vehicle received in the step increases for a third time threshold t₃, it is determined in step S 120 that there is the detected acceleration longitudinal obstacle such as a downhill slope in front of the vehicle. Correspondingly, in step S130, the compensation torque of a negative value is generated based on the detected acceleration longitudinal obstacle, such that the required torque generated after the compensation is less than the control torque before the compensation, thereby helping the vehicle maintain a stable speed and providing better driving experience for passengers in the vehicle.

In another embodiment, if the required torque received in step S 110 does not increase, while the acceleration of the vehicle received in the step increases for a fourth time threshold t₄, it is determined in step S 120 that there is the detected acceleration longitudinal obstacle such as a downhill slope in front of the vehicle. Correspondingly, in step S130, the compensation torque of a negative value is generated based on the detected acceleration longitudinal obstacle, such that the required torque generated after the compensation is less than the control torque before the compensation, thereby helping the vehicle maintain a stable speed and providing better driving experience for passengers in the vehicle.

In still another embodiment, if the required torque received in step S 110 does not increase, while the speed of the vehicle received in the step increases for the third time threshold t₃ and the acceleration of the vehicle received in the step increases for the fourth time threshold t₄, it is determined in step S 120 that there is the detected acceleration longitudinal obstacle such as a downhill slope in front of the vehicle. Correspondingly, in step S130, the compensation torque of a negative value is generated based on the detected acceleration longitudinal obstacle, such that the required torque generated after the compensation is less than the control torque before the compensation, thereby helping the vehicle maintain a stable speed and providing better driving experience for passengers in the vehicle. Using both the third time threshold t₃ and the fourth time threshold t₄ to detect the acceleration longitudinal obstacle can further improve robustness of the detection.

In the context of the invention, the third time threshold t₃ is a predetermined threshold used to detect a longitudinal obstacle for a vehicle, and may be any appropriate time threshold, such as 0 ms, 2 ms, or 4 ms, that can be used to detect an acceleration longitudinal obstacle in front of the vehicle based on a vehicle speed. The fourth time threshold t₄ is a predetermined threshold used to detect a longitudinal obstacle for a vehicle, and may be any appropriate time threshold, such as 0 ms, 2 ms, or 4 ms, that can be used to detect an acceleration longitudinal obstacle in front of the vehicle based on an acceleration.

It should be understood that the detection of the acceleration longitudinal obstacle in the control method 1000 is performed based on, but not limited to, the vehicle speed, the acceleration, or a combination of the vehicle speed and the acceleration, and may also be performed based on any appropriate vehicle motion parameter such as the acceleration change rate or any combination of any of the parameters. The invention is not limited thereto.

FIG. 2 is a block diagram of a vehicle control device 2000 according to an embodiment of the invention. The control device 2000 includes a memory 210 and a processor 220. The control device 2000 further includes a computer program (not shown in FIG. 2) stored on the memory 210 and executable on the processor 220, so as to implement the steps of the vehicle control method in the foregoing embodiment.

The memory 210 may be a random access memory (RAM), a read-only memory (ROM), an electrically programmable read-only memory (EPROM), an electrically erasable read-only memory (EEPROM), an optical disk storage device, a magnetic disk storage device, or any other medium capable of carrying or storing desired program code in the form of machine-executable instructions or data structures and capable of being accessed by the processor 220. The processor 220 may be any proper dedicated or general-purpose processor such as a field-programmable array (FPGA), an application-specific integrated circuit (ASIC), or a digital signal processor (DSP).

The control device 2000 may be a separate control device configured to detect a longitudinal obstacle in front of a vehicle and for torque compensation, or may be integrated into another processing device such as an electronic control unit (ECU) or a domain control unit (DCU).

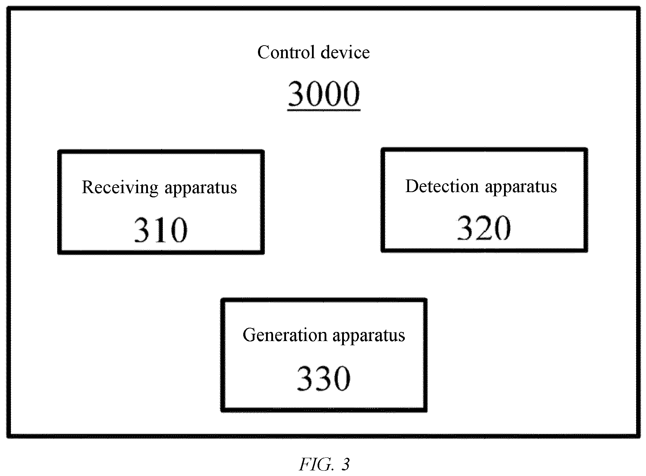

FIG. 3 is a block diagram of a vehicle control device 3000 according to an embodiment of the invention. The vehicle control device 3000 includes a receiving apparatus 310, a detection apparatus 320, and a generation apparatus 330.

Specifically, the receiving apparatus 310 is configured to receive a motion parameter of a vehicle. As described above, in the context of the invention, the "motion parameter of a vehicle" is intended to represent a parameter indicating a vehicle motion, such as a speed, an acceleration, an acceleration change rate, required torque of the vehicle.

The detection apparatus 320 is configured to detect, based on the motion parameter received by the receiving apparatus 310, whether there is a longitudinal obstacle in front of the vehicle. As described above, in the context of the invention, the "longitudinal obstacle" includes a deceleration obstacle and an acceleration obstacle. The "deceleration obstacle" is intended to represent an obstacle, such as a speed bump and an uphill slope, that has a negative effect on forward traveling of the vehicle and makes the vehicle decelerate. The "acceleration obstacle" is intended to represent an obstacle, such as a downhill slope, that has a positive effect on forward traveling of the vehicle and makes the vehicle accelerate.

In addition, it should be noted that some obstacles may include both a deceleration obstacle and an acceleration obstacle. For example, for a low-lying area of a road, a downhill part in the first half of the area may be an acceleration obstacle for the vehicle, and an uphill part in the second half of the area may be a deceleration obstacle for the vehicle. Therefore, a torque compensation operation described in detail below needs to be performed for the first half and second half of the low-lying area, respectively.

The generation apparatus 330 is configured to: when the detection apparatus 320 detects that there is a longitudinal obstacle in front of the vehicle, generate compensation torque based on the detected longitudinal obstacle, to perform compensation for control torque of the vehicle to generate required torque of the vehicle.

As described above, in the context of the invention, the "control torque" is intended to represent a torque value generated by a vehicle controller for controlling a vehicle torque output without considering the longitudinal obstacle.

The control torque can be determined by using an open-loop method. To be specific, the control torque can be determined based on a target vehicle speed and a current vehicle speed by using a comprehensive look-up table. Using such a control method cannot feed back an impact of the longitudinal obstacle in front of the vehicle on the speed in a timely manner, and further, cannot adjust control over the vehicle in real time based on the impact, which results in low control precision and unsatisfactory passenger experience. The control torque can also be determined by using a closed-loop method. To be specific, the control torque is determined in real time based on a difference between the current vehicle speed and the target vehicle speed by using a PID control algorithm. Using a PID closed-loop control method may achieve high control precision. However, the PID control method has a certain time lag. When the vehicle encounters a passable obstacle (such as a longitudinal obstacle), using the PID control method may be unable to respond to a sudden change of road condition in a timely manner. This greatly reduces control precision of the vehicle, thereby affecting driving comfortableness.

Therefore, according to the vehicle control device in the embodiment of the invention, when it is detected that there is a longitudinal obstacle in front of the vehicle, corresponding compensation torque can be generated based on the detected obstacle. The compensation torque can be used together with the control torque from the vehicle controller (such as a PID controller) to generate the required torque of the vehicle. This enables an impact of the longitudinal obstacle in front of the vehicle on the vehicle motion to be fed back for the vehicle control in real time, thereby avoiding or at least mitigating the impact of the obstacle on the vehicle control, and improving the vehicle control precision and vehicle driving experience.

In an embodiment, the detection apparatus 320 may be further configured to: if the required torque of the vehicle does not decrease, while the speed of the vehicle decreases for a first time threshold t₁, determine that there is the detected deceleration longitudinal obstacle in front of the vehicle. Correspondingly, the generation apparatus 330 may be further configured to generate the compensation torque based on the detected deceleration longitudinal obstacle, so that the required torque is greater than the control torque, thereby helping the vehicle maintain a stable speed and providing better driving experience for passengers in the vehicle.

In another embodiment, the detection apparatus 320 may be further configured to: if the required torque of the vehicle does not decrease, while the acceleration of the vehicle decreases for a second time threshold t₂, determine that there is the detected deceleration longitudinal obstacle in front of the vehicle. Correspondingly, the generation apparatus 330 may be further configured to generate the compensation torque based on the detected deceleration longitudinal obstacle, so that the required torque is greater than the control torque, thereby helping the vehicle maintain a stable speed and providing better driving experience for passengers in the vehicle.

In still another embodiment, the detection apparatus 320 may be further configured to: if the received required torque does not decrease, while the received speed of the vehicle decreases for the first time threshold t₁ and the received acceleration of the vehicle decreases for the second time threshold t₂, determine that there is the detected deceleration longitudinal obstacle such as a speed bump or an uphill slope in front of the vehicle. Correspondingly, the generation apparatus 330 may be further configured to generate the compensation torque of a positive value based on the detected deceleration longitudinal obstacle, such that the required torque generated after the compensation is greater than the control torque before the compensation, thereby helping the vehicle maintain a stable speed and providing better driving experience for passengers in the vehicle. Using both the first time threshold t₁ and the second time threshold t₂ to detect the deceleration longitudinal obstacle can further improve robustness of the detection.

As described above, in the context of the invention, the first time threshold t₁ is a predetermined threshold used to detect a longitudinal obstacle for a vehicle, and may be any appropriate time threshold, such as 0 ms, 2 ms, or 4 ms, that can be used to detect a deceleration longitudinal obstacle in front of the vehicle based on a vehicle speed. The second time threshold t₂ is a predetermined threshold used to detect a longitudinal obstacle for a vehicle, and may be any appropriate time threshold, such as 0 ms, 2 ms, or 4 ms, that can be used to detect a deceleration longitudinal obstacle in front of the vehicle based on an acceleration.

It should be understood that the detection of the deceleration longitudinal obstacle by using the control device 3000 is performed based on, but not limited to, the vehicle speed, the acceleration, or a combination of the vehicle speed and the acceleration, and may also be performed based on any appropriate vehicle motion parameter such as the acceleration change rate or any combination of any of the parameters. The invention is not limited thereto.

In an embodiment, the detection apparatus 320 may be further configured to: if the required torque of the vehicle does not increase, while the speed of the vehicle increases for a third time threshold t₃, determine that there is the detected acceleration longitudinal obstacle in front of the vehicle. Correspondingly, the generation apparatus 330 may be further configured to generate the compensation torque based on the detected acceleration longitudinal obstacle, so that the required torque is less than the control torque, thereby helping the vehicle maintain a stable speed and providing better driving experience for passengers in the vehicle.

In another embodiment, the detection apparatus 320 may be further configured to: if the required torque of the vehicle does not increase, while the acceleration of the vehicle increases for a fourth time threshold t₄, determine that there is the detected acceleration longitudinal obstacle in front of the vehicle. Correspondingly, the generation apparatus 330 may be further configured to generate the compensation torque based on the detected acceleration longitudinal obstacle, so that the required torque is less than the control torque, thereby helping the vehicle maintain a stable speed and providing better driving experience for passengers in the vehicle.

In still another embodiment, the detection apparatus 320 may be further configured to: if the required torque of the vehicle does not increase, while the speed of the vehicle increases for the third time threshold t₃ and the acceleration of the vehicle increases for the fourth time threshold t₄, determine that there is the detected acceleration longitudinal obstacle in front of the vehicle. Correspondingly, the generation apparatus 330 may be further configured to generate the compensation torque of a negative value based on the detected acceleration longitudinal obstacle, so that the required torque is less than the control torque, thereby helping the vehicle maintain a stable speed and providing better driving experience for passengers in the vehicle. Using both the third time threshold t₃ and the fourth time threshold t₄ to detect the acceleration longitudinal obstacle can further improve robustness of the detection.

As described above, in the context of the invention, the third time threshold t₃ is a predetermined threshold used to detect a longitudinal obstacle for a vehicle, and may be any appropriate time threshold, such as 0 ms, 2 ms, or 4 ms, that can be used to detect an acceleration longitudinal obstacle in front of the vehicle based on a vehicle speed. The fourth time threshold t₄ is a predetermined threshold used to detect a longitudinal obstacle for a vehicle, and may be any appropriate time threshold, such as 0 ms, 2 ms, or 4 ms, that can be used to detect an acceleration longitudinal obstacle in front of the vehicle based on a vehicle speed.

It should be understood that the detection of the acceleration longitudinal obstacle by using the control device 3000 is performed based on, but not limited to, the vehicle speed, the acceleration, or a combination of the vehicle speed and the acceleration, and may also be performed based on any appropriate vehicle motion parameter such as the acceleration change rate or any combination of any of the parameters. The invention is not limited thereto.

It should be understood that some of the block diagrams shown in the accompanying drawings of the invention are functional entities and do not necessarily correspond to physically or logically independent entities. These functional entities may be implemented in the form of software, in one or more hardware modules or integrated circuits, or in different networks and/or processor apparatuses and/or micro-controller apparatuses.

It should also be understood that in some alternative embodiments, the functions/steps included in the foregoing method may not occur in the order shown in the flowchart. For example, two functions/steps shown in sequence may be executed substantially simultaneously or even in a reverse order. This specifically depends on the functions/steps involved.

In addition, those skilled in the art readily understand that the vehicle control method provided in the one or more embodiments of the invention can be implemented by using a computer program. For example, when a computer storage medium (for example, a USB flash drive) storing the computer program is connected to a computer, the vehicle control method in one or more embodiments of the invention can be performed by running the computer program.

In conclusion, according to the vehicle control solution in the embodiment of the invention, whether there is a longitudinal obstacle in front of the vehicle can be detected based on the motion parameter of the vehicle, and corresponding compensation torque can be generated based on the detection result. The compensation torque can be used to adjust original control torque to generate the required torque of the vehicle. Therefore, according to the vehicle control solution in the embodiment of the invention, the longitudinal obstacle in front of the vehicle can be detected in a timely manner, and an impact of the longitudinal obstacle ahead on the vehicle motion can be feed back in the required torque in real time, thereby improving both control precision and driving experience of the vehicle.

Although only some implementations of the invention are described, those of ordinary skill in the art should understand that the invention may be implemented in multiple other forms without departing from the essence and scope of the invention. Accordingly, the presented examples and implementations are considered to be illustrative rather than restrictive, and the invention may encompass various modifications and replacements without departing from the spirit and scope of the invention that are defined by the appended claims.

## Claims

1. A vehicle control method, comprising:
receiving a motion parameter of a vehicle;
detecting, based on the motion parameter, whether there is a longitudinal obstacle in front of the vehicle; and
when it is detected that there is the longitudinal obstacle in front of the vehicle, generating compensation torque based on the detected longitudinal obstacle, to perform compensation for a control torque of the vehicle to generate required torque of the vehicle.

2. The vehicle control method according to claim 1, wherein the motion parameter of the vehicle comprises at least one of the following parameters:
a speed, an acceleration, an acceleration change rate, and the required torque of the vehicle.

3. The vehicle control method according to claim 1 or 2, wherein the longitudinal obstacle comprises a deceleration obstacle and an acceleration obstacle, wherein the deceleration obstacle comprises at least a speed bump and an uphill slope, and the acceleration obstacle comprises at least a downhill slope.

4. The vehicle control method according to any one of claims 1 to 3, wherein if the required torque does not decrease, while the speed decreases for a first time threshold and/or the acceleration decreases for a second time threshold, it is determined that there is the detected deceleration longitudinal obstacle in front of the vehicle; and
the compensation torque is generated based on the detected deceleration longitudinal obstacle, so that the required torque is greater than the control torque.

5. The vehicle control method according to claim 3 ro 4, wherein
if the required torque does not increase, while the speed increases for a third time threshold and/or the acceleration increases for a fourth time threshold, it is determined that there is the detected acceleration longitudinal obstacle in front of the vehicle; and
the compensation torque is generated based on the detected acceleration longitudinal obstacle, so that the required torque is less than the control torque.

6. A vehicle control device, comprising:
a receiving apparatus configured to receive a motion parameter of a vehicle;
a detection apparatus configured to detect, based on the motion parameter, whether there is a longitudinal obstacle in front of the vehicle; and
a generation apparatus configured to: generate compensation torque based on the detected longitudinal obstacle when it is detected that there is the longitudinal obstacle in front of the vehicle, to perform compensation for a control torque of the vehicle to generate required torque of the vehicle.

7. The vehicle control device according to claim 6, wherein the motion parameter of the vehicle comprises at least one of the following parameters:
a speed, an acceleration, an acceleration change rate, and the required torque of the vehicle.

8. The vehicle control device according to claim 6 or 7, wherein the longitudinal obstacle comprises a deceleration obstacle and an acceleration obstacle, wherein the deceleration obstacle comprises at least a speed bump and an uphill slope, and the acceleration obstacle comprises at least a downhill slope.

9. The vehicle control device according to any one of claims 6 to8, wherein the detection apparatus is further configured to: if the required torque does not decrease, while the speed decreases for a first time threshold and/or the acceleration decreases for a second time threshold, determine that there is the detected deceleration longitudinal obstacle in front of the vehicle; and
the generation apparatus is further configured to generate the compensation torque based on the detected deceleration longitudinal obstacle, so that the required torque is greater than the control torque.

10. The vehicle control device according to claim 8, wherein
the detection apparatus is further configured to: if the required torque does not increase, while the speed increases for a third time threshold and/or the acceleration increases for a fourth time threshold, determine that there is the detected acceleration longitudinal obstacle in front of the vehicle; and
the generation apparatus is further configured to generate the compensation torque based on the detected acceleration longitudinal obstacle, so that the required torque is less than the control torque.

11. A vehicle control device, comprising a memory, a processor, and a computer program stored on the memory and executable on the processor, wherein the processor, when executing the computer program, implements the vehicle control method according to any one of claims 1 to 5.
